# EUROPÄISCHE PATENTANMELDUNG

(11) **EP 1 457 763 A2**
(43) Veröffentlichungstag der Anmeldung: **15.09.2004**
(21) Anmeldenummer: 03028357.6
(22) Anmeldetag: 10.12.2003
(51) Int. Cl.: G01J 1/00, B60S 1/08

(54) **Verfahren zum Betreiben eines Sensors zur Detektion von Störeinflüssen auf einem durchlässigen Körper**

(30) Priorität: 12.03.2003 DE 10311800
(71) Anmelder: Valeo Schalter und Sensoren GmbH, 74321 Bietigheim-Bissingen (DE)
(72) Erfinder: Schuhmacher, Tobias, 71665 Vaihingen-Horrheim (DE); Nies, Jürgen, 75181 Pforzheim (DE); Reichert, Andreas, 74343 Sachsenheim (DE)
(74) Vertreter: Steimle, Josef, Dipl.-Ing.

(57) **Zusammenfassung**

Die Erfindung betrifft einen Sensor und ein Verfahren zur Detektion von Störeinflüssen auf einer Außenseite eines optisch durchlässigen Körpers, insbesondere einer Windschutzscheibe. Der bisher vorgesehene Sensor war nicht ausgebildet, zwischen Regentropfen und Staubpartikeln, die beide eine schnelle, das heißt dynamische Form der Veränderung der Verunreinigung des Körpers bewirken, zu unterscheiden. Diese fehlende Unterscheidungsmöglichkeit war nachteilig im Hinblick auf eine Entscheidung über die vorzunehmende Reinigung des Körpers. So wurden beispielsweise reine Wischvorgänge ohne die Zuführung von einer Reinigungsflüssigkeit vorgenommen, was regelmäßig zu unerwünschten Kratzern auf dem Körper sowie zu einer nicht zufriedenstellenden Reinigung des Körpers führte. Um diesen Nachteil zu beheben und insbesondere, um eine eindeutige Entscheidung über das Vorliegen von Regen oder Staub auf dem Körper treffen zu können, wird erfindungsgemäß vorgeschlagen, in dem Sensor vorhandene Sendeelemente, welche für die Detektion von Staub oder Schmutz zuständig sind, wahlweise aktivieren oder deaktivieren zu können.

## Beschreibung

Die Erfindung betrifft ein Verfahren zum Betreiben eines Sensors zur Detektion von Störeinflüssen auf einer Außenseite eines optisch durchlässigen Körpers. Die Erfindung betrifft weiterhin ein Computerprogramm (eine Software) zur Durchführung dieses Verfahrens, einen Sensor zur Detektion der Störeinflüsse, ein Speicherelement zum Speichern des Computerprogramms und ein Steuergerät zum Ansteuern des Sensors.

Derartige Verfahren, Sensoren und Steuergeräte sind aus dem Stand der Technik, insbesondere aus der DE 1 017 397 A1 bekannt. Der dort offenbarte Sensor ist auf der Innenseite des optisch durchlässigen Körpers, insbesondere einer Windschutzscheibe eines Kraftfahrzeugs, angeordnet. Er umfasst mindestens ein optisches Empfangselement sowie zwei Sendezweige, jeweils zum Aussenden von Licht. In einem ersten Sendezweig ist zumindest ein sogenanntes S-Typ-Sendeelement (S:Schmutz) vorgesehen, welches so ausgerichtet ist, dass ein Großteil der von ihm ausgesandten optischen Strahlen beim Auftreffen auf Schmutzpartikel auf der Außenseite des Körpers zumindest teilweise an der Außenseite des Körpers auf das Empfangselement rückgestreut werden. In dem ersten Sendezweig ist neben dem S-Typ-Sendeelement noch mindestens ein R-Typ-Sendeelement (R:Regen) aktiviert. Das R-Typ-Sendeelement ist so ausgerichtet, dass ein Großteil der von ihnen ausgesandten optischen Strahlen ohne Feuchtigkeitstropfen oder Staubpartikel an der Außenseite des optisch durchlässigen Körpers auf das Empfangselement totalreflektiert werden.

Der zweite Sendezweig enthält dagegen nur R-Typ-Sendeelemente.

In dem besagten Stand der Technik ist vorgesehen, dass diese beiden Sendezweige alternierend betrieben werden. Es wird dann jeweils die Leistung des durch das Empfangselement empfangenen Lichtes von dem ersten Sendezweig mit der Leistung des von dem zweiten Sendezweig empfangenen Lichtes verglichen.

Für den Fall, dass die Differenz der empfangenen Lichtleistungen der beiden Sendezweige einen vorgegebenen Schwellenwert überschreitet, ist ein Wischen der Außenseite des optisch durchlässigen Körpers vorgesehen. Es ist jedoch in diesem Fall ausdrücklich kein Waschen, das heißt keine Befeuchtung der Außenseite vorgesehen, weil davon ausgegangen wird, dass der festgestellte Vergleich zwischen den empfangenen Lichtleistungen aufgrund von Feuchtigkeitstropfen, das heißt insbesondere durch Regentropfen verursacht wird.

Diese Annahme, dass es sich bei Vorliegen der erwähnten Differenz um eine Störung durch Regen handelt, basiert auf der Voraussetzung, dass die Detektion mit Hilfe einer schnellen Regelung erfolgt, welche insbesondere auf schnelle Veränderungen im Hinblick auf die optische Durchlässigkeit des Körpers reagiert.

Im Stand der Technik wird jedoch außer Acht gelassen, dass eine derartige schnelle Änderung der Durchlässigkeit des optischen Körpers nicht alleine durch Regen verursacht werden kann, sondern zum Beispiel auch durch trockene Staubpartikel. Dabei sind Staubpartikel zu unterscheiden von sonstigen Schmutzpartikeln, welche im Gegensatz zu Staubpartikeln lediglich eine langsame Veränderung der Durchlässigkeit des optischen Körpers bewirken würden. Auf derartige Schmutzpartikel würde die im Stand der Technik beschriebene schnelle Regelung (Leistungsregelung) nicht ansprechen.

Das im Stand der Technik beschriebene Verfahren und der dort beschriebene Sensor haben den Nachteil, dass ein reiner Wischvorgang ohne Zufügung von Wasser auch dann durchgeführt würde, wenn eine schnelle Veränderung der Durchlässigkeit des optischen Körpers alleine durch trockene Staubpartikel erfolgt. Dies kann zu unerwünschten Kratzern auf der Außenseite des optisch durchlässigen Körpers führen und bringt darüber hinaus auch nicht den gewünschten Reinigungseffekt.

Ausgehend von diesem Stand der Technik ist es die Aufgabe der vorliegenden Erfindung, ein bekanntes Verfahren zum Betreiben eines Sensors zur Detektion von Störeinflüssen auf der Außenseite eines optisch durchlässigen Körpers, ein Computerprogramm zur Durchführung dieses Verfahrens, einen Sensor zur Detektion der Störeinflüsse, ein Speicherelement zum Speichern dieses Computerprogramms und ein Steuergerät zum Steuern des Sensors derart weiterzubilden, dass zwischen Feuchtigkeitstropfen und Staubpartikeln, welche beide für eine schnelle beziehungsweise dynamische Veränderung der Durchlässigkeit des optischen Körpers verantwortlich sein können, unterschieden werden kann.

Diese Aufgabe wird erfindungsgemäß durch das in Patentanspruch 1 beanspruchte Verfahren gelöst. Es sieht vor, dass das einleitend beschriebene Verfahren mit deaktiviertem S-Typ-Sendeelement in dem ersten Sendezweig durchgeführt wird.

Auf diese Weise wird vorteilhafterweise sichergestellt, dass in dem ersten Sendezweig genau wie in dem zweiten Sendezweig nur R-Typ-Sendeelemente aktiviert sind. Die Sendeelemente in den beiden Sendezweigen reagieren dann gleichermaßen auf Feuchtigkeit beziehungsweise Regentropfen auf der Außenseite des optisch durchlässigen Körpers; genauer gesagt werden sie aufgrund ihrer Ausrichtung zumindest weitgehend von diesen auf das Empfangselement totalreflektiert. Weil bei diesem Betrieb erfindungsgemäß das S-Typ-Sendeelement deaktiviert ist, kann dieses keinen Beitrag zu der von dem Empfangselement empfangenen Lichtleistung aufgrund des Streulichteffektes an eventuell vorhandenen Staubpartikeln leisten. Durch den Betrieb des Sensors bei deaktiviertem S-Typ-Sendeelement kann deshalb mit Sicherheit festgestellt werden, dass bei Vorliegen einer Differenz der empfangenen Lichtleistungen der beiden Sendezweige Feuchtigkeitstropfen beziehungsweise insbesondere Regentropfen auf der Außenseite des optisch durchlässigen Körpers vorhanden sind. In diesem Fall ist dann ein reiner Wischvorgang ausreichend. Eine zusätzliche Wasserzufuhr, wie sie zum Beispiel bei einem Waschvorgang erfolgt, ist dann nicht erforderlich.

Für eine Detektion von trockenen Staubpartikeln oder Schmutzpartikeln sieht die vorliegende Erfindung einen Schmutz-Modus vor. In diesem Schmutz-Modus werden die S-Typ-Sendeelemente neben den R-Typ-Sendeelementen in dem ersten Sendezweig A aktiviert. Durch die zusätzliche Aktivierung der S-Typ-Sendeelemente wird sichergestellt, dass Staub- oder Schmutzpartikel erkannt werden. Es ist dann erforderlich, nicht nur einen trockenen Wischvorgang, sondern zusätzlich auch einen Waschvorgang für die Außenseite des Körpers vorzusehen, bei dem insbesondere Wischwasser, gegebenenfalls mit einem Reinigungszusatz, zugeführt wird.

Neben den beiden bisher beschriebenen Modi, dem Regen-Modus und dem Schmutz-Modus ist noch ein Standby-Modus vorgesehen. Auch der Standby-Modus sieht einen abwechselnden Betrieb des ersten Sendezweiges A und des zweiten Sendezweiges B vor, wobei in dem Sendezweig A wiederum die S- und R-Typ-Sendeelemente aktiviert sind. Das Auftreten einer Differenz zwischen der von beiden Sendezweigen empfangenen Lichtleistung lässt auf das Vorliegen einer Störung schließen, wobei allerdings nicht festgestellt werden kann, wodurch diese Störung verursacht wurde. Dies ist jedoch im Standby-Modus auch nicht erforderlich, denn er dient lediglich zur Feststellung, ob eine Störung vorliegt oder nicht, denn er leitet selber weder einen Wisch- noch einen Waschvorgang ein. Sollte während eines Standby-Modus eine Differenz der empfangenen Lichtleistungen festgestellt werden, so geht das Verfahren wahlweise entweder in den Regen-Modus oder in den Schmutz-Modus über.

Weitere vorteilhafte Ausgestaltungen des Verfahrens sind Gegenstand der Unteransprüche.

Die oben genannte Aufgabe wird weiterhin durch ein Computerprogramm zum Durchführen des Verfahrens, ein Speicherelement zum Speichern des Computerprogramms, einen Sensor zur Detektion der Störeinflüsse in Form von Feuchtigkeitstropfen, Staubpartikeln oder Schmutzpartikeln sowie durch ein Steuergerät zur Steuerung des Sensors gelöst. Die Vorteile dieser Lösungen entsprechen den oben im Hinblick auf das erfindungsgemäße Verfahren genannten Vorteilen.

In der Zeichnung zeigen:
- Figur 1: einen Querschnitt durch den erfindungsgemäßen Sensor, eingebaut an einem optisch durchlässigen Körper;
- Figur 2: einen Sensor als elektronische Schaltung mit zwei Sendezweigen und einem Schaltelement;
- Figur 3: eine Draufsicht auf den Sensor;
- Figur 4: den Strahlengang eines R-Typ-Sendeelementes aus Figur 1 bei trockener Scheibe;
- Figur 5: den Strahlengang des R-Typ-Sendeelementes bei Feuchtigkeitstropfen auf der Außenseite des optisch durchlässigen Körpers,
- Figur 6: den Strahlengang eines S-Typ-Sendeelementes bei staub- und schmutzfreier Außenseite des optisch durchlässigen Körpers;
- Figur 7: den Strahlengang eines S-Typ-Sendeelementes bei Staub- oder Schmutzpartikeln auf der Außenseite des Körpers;
- Figur 8: ein Steuergerät zum Ansteuern des Sensors; und
- Figur 9: ein Flussdiagramm zur Veranschaulichung des erfindungsgemäßen Verfahrens.

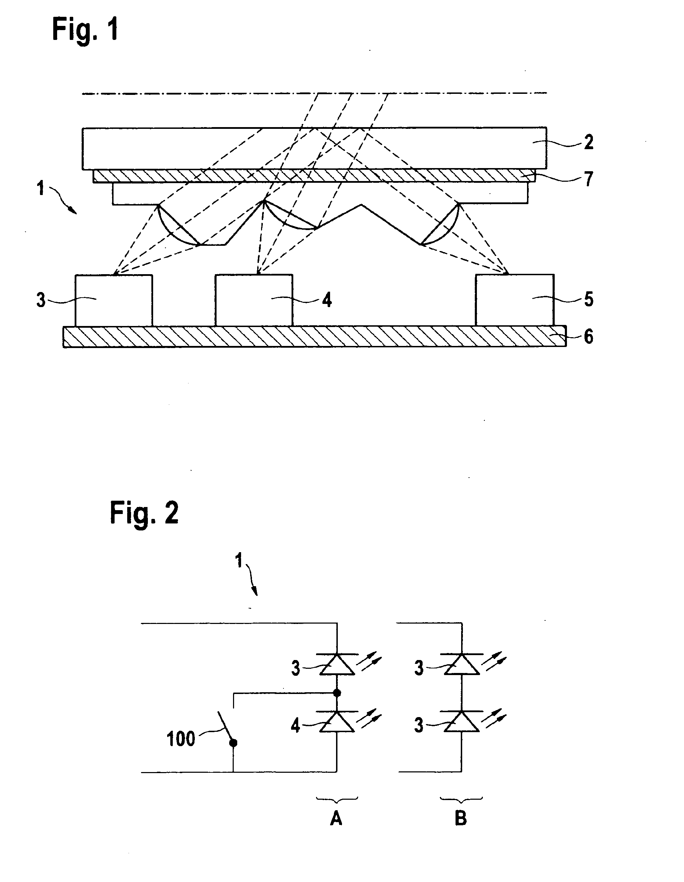

Figur 1 zeigt den erfindungsgemäßen Sensor 1 zur Detektion von Störeinflüssen auf einer Außenseite eines optisch durchlässigen Körpers 2. Bei den Störeinflüssen kann es sich insbesondere um Feuchtigkeitstropfen, das heißt Regentropfen, Staubpartikel oder Schmutzpartikel handeln. Bei dem optisch durchlässigen Körper 2 handelt es sich insbesondere um die Windschutzscheibe eines Kraftfahrzeugs. Der Sensor 1 ist mit einem transparenten optischen Kopplungselement 7 an der Innenseite der Windschutzscheibe befestigt. Er umfasst mindestens ein optisches Empfangselement 5 sowie zwei Sendezweige A und B mit jeweils mindestens zwei Sendeelementen 3, 4.

Figur 2 zeigt den elektrischen Aufbau des Sensors 1. Es ist zu erkennen, dass die beiden separat angesteuerten Sendezweige A und B jeweils eine Reihenschaltung von optischen Sendeelementen 3 und 4 enthalten. Weiterhin ist erfindungsgemäß im Unterschied zum Stand der Technik ein Schaltelement 100 zu erkennen, welches parallel zu dem Sendeelement 4 geschaltet ist, so dass es dieses in geschlossenem Zustand kurzschließt, das heißt deaktiviert. Umgekehrt ist das Sendeelement 4 bei geöffnetem Schaltelement 100 in dem ersten Sendezweig A aktiv.

Die einzelnen Sendeelemente in den Sendezweigen haben teilweise unterschiedliche Aufgaben und sind deswegen mit unterschiedlichen Bezugszeichen 3 beziehungsweise 4 bezeichnet, obwohl es sich bei all diesen Sendeelementen vorzugsweise um dieselben Leuchtdioden handelt. Die unterschiedlichen Funktionen erfüllen die einzelnen Sendeelemente aufgrund ihrer unterschiedlichen Anordnung innerhalb des Sensors in Bezug auf das Empfangselement 5. Dies wird nachfolgend unter Bezugnahme auf die Figuren 1 und 3 - 7 näher erläutert.

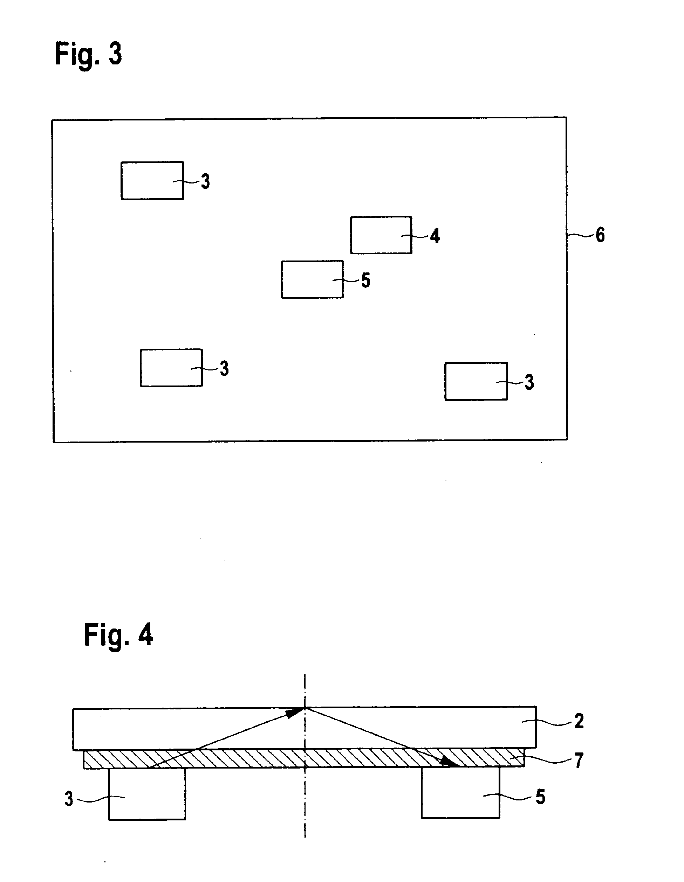

Bereits in Figur 1 ist zu erkennen, dass die auf einer elektronischen Leiterplatte 6 angeordneten Sendeelemente 3 und 4 einen unterschiedlichen Abstand zu dem Empfangselement 5 haben. Dies wird nochmals verdeutlicht durch die in Figur 3 gezeigte Draufsicht auf die besagte elektrische Leiterplatte 6. Diese unterschiedlichen Abstände der Sendeelemente zu dem Empfangselement 5 befähigen die Sendeelemente zur Durchführung der ihnen zugewiesenen unterschiedlichen Funktionen.

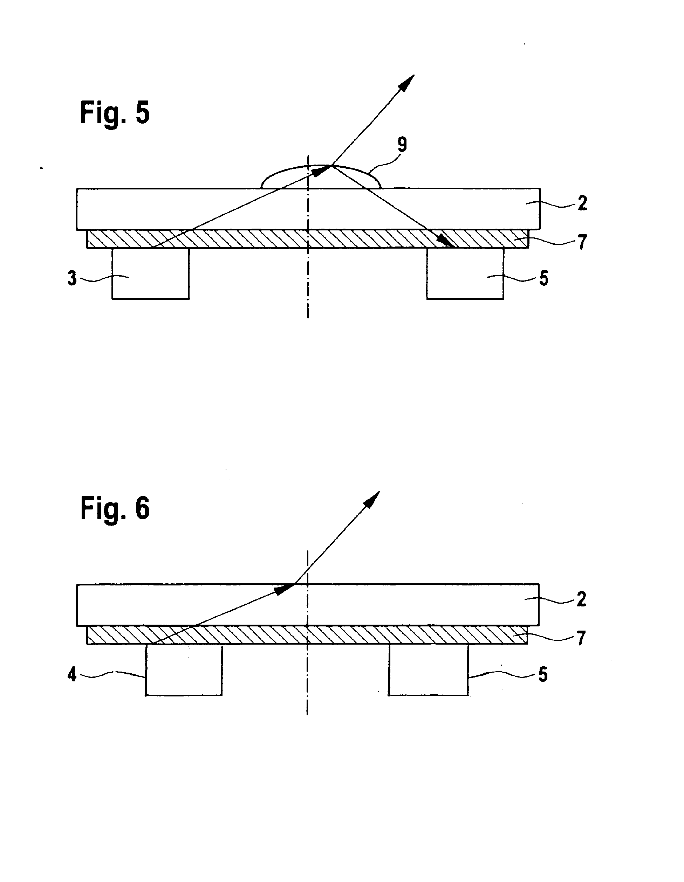

Die Sendeelemente 3, die einen größeren Abstand zu dem Empfangselement 5 aufweisen als die Sendeelemente 4, dienen zur Detektion von Regen auf der Außenseite der Windschutzscheibe; sie werden deshalb nachfolgend auch als R-Typ-Sendeelemente bezeichnet. Zu diesem Zweck sind sie, wie in Figur 4 veranschaulicht, in einem solchen Abstand zu dem Empfangselement 5 angeordnet und ausgerichtet, dass die von ihnen ausgesandten optischen Strahlen dann auf das Empfangselement 5 totalreflektiert werden, wenn keine Regentropfen auf der Außenseite der Windschutzscheibe 2 vorhanden sind. Für den Fall, dass Feuchtigkeitstropfen 9 auf der Außenseite des Körpers 2 vorhanden sind, wird ein Großteil der von den Sendeelementen 3 ausgesandten optischen Strahlen aus dem optischen Körper 2 ausgekoppelt (siehe Figur 5). Nur noch ein geringer Teil der Strahlen wird dann auf das Empfangselement 5 zurückreflektiert. Bei einem Betrieb der Sendeelemente 3 ist also ein Unterschied in der von dem Empfangselement 5 empfangenen Lichtleistung festzustellen, je nachdem, ob Feuchtigkeitstropfen auf der Außenseite des optisch durchlässigen Körpers 2 vorhanden sind oder nicht. Aufgrund dieser Leistungsdifferenz kann auf das Vorliegen dieser Feuchtigkeitstropfen geschlossen werden.

Demgegenüber dienen die Sendeelemente mit dem Bezugszeichen 4 zur Detektion von Staubpartikeln oder Schmutzpartikeln. Die Unterscheidung zwischen Staubpartikeln und Schmutzpartikeln wird deswegen getroffen, weil Schmutzpartikel im Unterschied zu Staubpartikeln ein anderes dynamisches Verhalten zeigen. Während Staubpartikel ähnlich wie Regentropfen eine große Dynamik bei der Verunreinigung des Körpers 2 aufweisen, zeichnen sich Schmutzpartikel eher durch eine träge beziehungsweise langsame Verunreinigung des optisch durchlässigen Körpers aus. Die Sendeelemente 4, nachfolgend auch als S-Typ-Sendeelemente bezeichnet, dienen jedenfalls zur Detektion von sowohl Schmutz- wie auch von Staubpartikeln. Zu diesem Zweck sind sie im Vergleich zu den Sendeelementen 3 kürzer zu dem Empfangselement 5 beabstandet. Wie aus Figur 6 ersichtlich ist, sind sie innerhalb des Sensors derart ausgerichtet, dass die von ihnen ausgesandten optischen Strahlen dann, wenn weder Schmutz- noch Staubpartikel auf der Außenseite des Körpers 2 vorhanden sind, aus diesem ausgekoppelt werden. Es werden dann so gut wie keine Anteile der von ihnen ausgesandten Strahlung auf das Empfangselement 5 reflektiert.

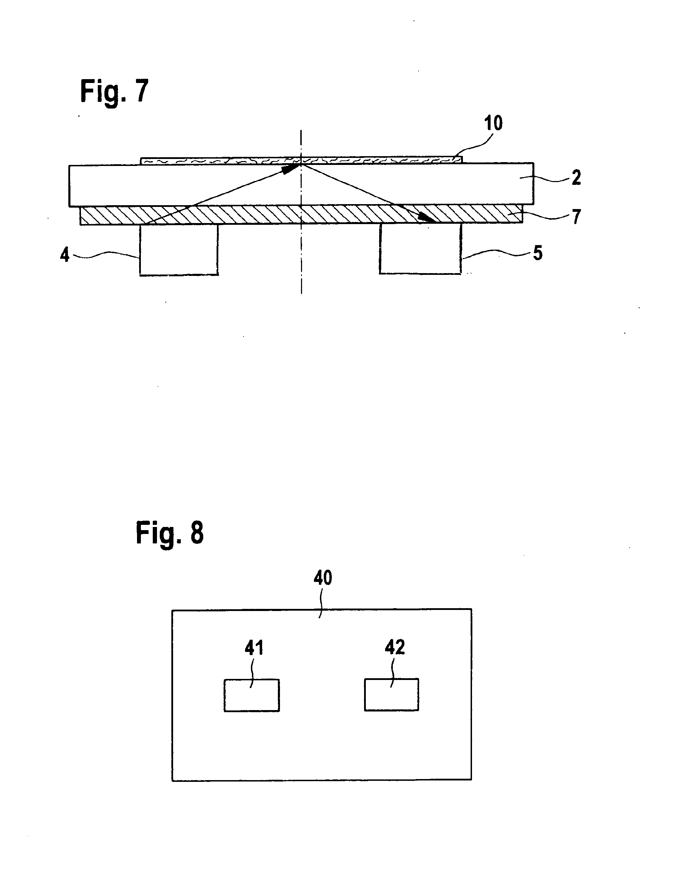

Anders ist die Situation jedoch, wenn sich eine Schmutzschicht 10 auf der Außenseite des Körpers 2 befindet, wie dies in Figur 7 dargestellt ist. Dann werden die von den S-Typ-Sendeelementen 4 ausgesandten optischen Strahlen an der Schmutzschicht 10 auf das Empfangselement 5 totalreflektiert. Auch bei den S-Typ-Sendelementen lässt sich aus einer Differenz zwischen den von dem Empfangselement 5 empfangenen Lichtleistungen auf das Vorhandensein von Staub- oder Schmutzpartikeln auf der Außenseite des durchlässigen Körpers schließen.

Wenn nun, wie in Figur 2 gezeigt, der Sendezweig A sowohl mit einem aktivierten R-Typ-Sendeelement 3 wie auch mit einem aktivierten S-Typ-Sendeelement 4 betrieben wird, und wenn abwechselnd dazu der Sendezweig B nur mit R-Typ-Sendeelementen 3 betrieben wird, kann aus einem Vergleich der von dem Empfangselement 5 von den beiden Sendezweigen A und B empfangenen Lichtleistungen nicht eindeutig auf das Vorliegen von Regen, Staub oder Schmutzpartikeln geschlossen werden. Eine diesbezüglich eindeutige Feststellung wäre jedoch im Hinblick auf die einzuleitenden Gegenmaßnahmen wünschenswert. So empfiehlt es sich zum Beispiel bei einer reinen Regendetektion, einen reinen Wischvorgang einzuleiten, während bei einer Staub- oder Schmutzpartikeldetektion ein Waschvorgang erforderlich ist, der neben einem Wischen auch eine Wasserzufuhr beziehungsweise eine Zufuhr von Reinigungsmitteln vorsieht.

Um eine derartige Unterscheidung vornehmen zu können, ist erfindungsgemäß das bereits oben unter Bezugnahme auf Figur 2 erwähnte Schaltelement 100 vorgesehen zum wahlweisen Aktivieren oder Deaktivieren des S-Typ-Sendeelementes 4 in dem ersten Sendezweig A.

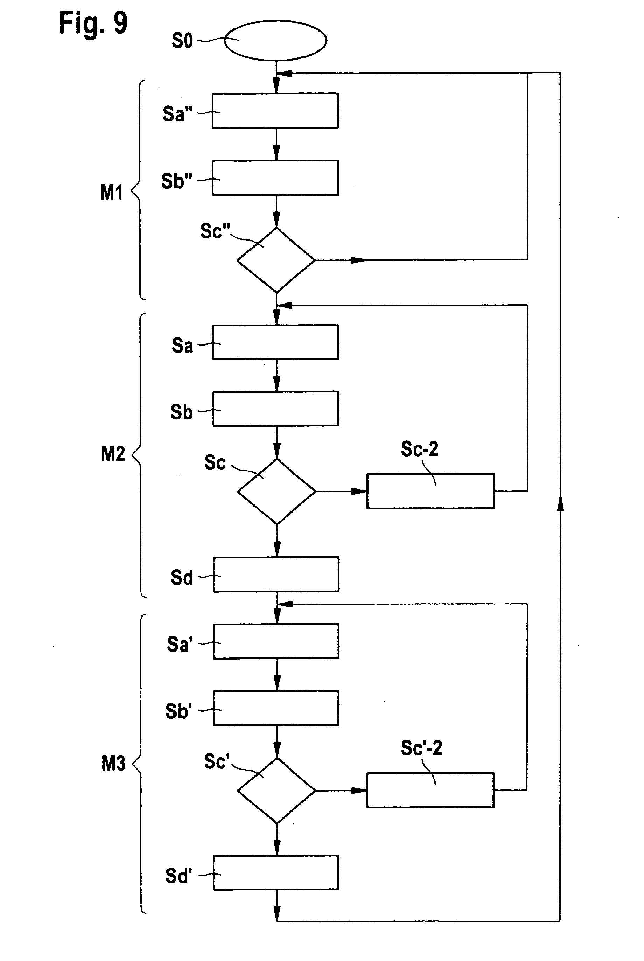

Figur 8 zeigt ein dem Sensor 1 zugeordnetes Steuergerät 40, welches das Schaltelement 100 öffnet oder schließt und auf diese Weise das S-Typ-Sendeelement 4 aktiviert oder deaktiviert. Das Öffnen oder Schließen des Schaltelementes 100 durch das Steuergerät 40 erfolgt nach Vorgabe durch ein Computerprogramm, welches vorzugsweise in einem Speicherelement 42 des Steuergerätes gespeichert ist und auf einem Rechengerät 41, insbesondere einem Mikroprozessor des Steuergerätes 40 abläuft. Das Computerprogramm dient zur Durchführung eines vorgesehenen Betriebs für den Sensor 1. Verschiedene Verfahren/Betriebsmodi für einen solchen Betrieb werden nachfolgend unter Bezugnahme auf Figur 9 näher beschrieben. Für alle nachfolgend beschriebenen Verfahren beziehungsweise Betriebsmodi gilt, dass immer nur jeweils einer der beiden Sendezweige A oder B, niemals jedoch beide Sendezweige gleichzeitig in Betrieb sind.

Nach einem Startschritt SO durchläuft der Sensor 1 zunächst einen Standby-Modus M1. Der Standby-Modus sieht in einem ersten Schritt Sa" zunächst vor, dass nur der erste Sendezweig A mit aktivierten R- und S-Typ-Sendeelementen 3, 4 betrieben wird und dass bei diesem Betrieb die dann von dem Empfangselement 5 empfangene Lichtleistung nach Reflektion des Lichtes an dem optisch durchlässigen Körper ermittelt und gespeichert wird. Der zweite Sendezweig B ist während der Durchführung von Schritt Sa'') vollständig deaktiviert. In einem Schritt Sb" sieht der Standby-Modus vor, dass der erste Sendezweig abgeschaltet und nur der zweite Sendezweig B mit seinen R-Typ-Sendeelementen 3 betrieben wird. Innerhalb des Schrittes Sb" wird auch dann die von dem Empfangselement 5 empfangene Lichtleistung nach Reflektion des Lichtes an dem optisch durchlässigen Körper ermittelt und gespeichert. In einem nachfolgenden Schritt Sc'' wird der zweite Sendezweig B vollständig deaktiviert und es werden dann die zuvor ermittelten Empfangsleistungen miteinander verglichen. Der Vergleich erfolgt vorzugsweise derart, dass die Differenz zwischen diesen beiden empfangenen Lichtleistungen aufintegriert und mit einem vorgegebenen Standby-Schwellenwert verglichen wird.

Sollte diese Differenz kleiner als der Standby-Schwellenwert sein, so lässt dies den Rückschluss zu, dass keine nennenswerte Störung auf der Außenseite des Körpers 2 vorhanden ist. Es erfolgt dann, mit einer vorbestimmten Verzögerung, beispielsweise 500 ms, ein Rücksprung auf den Beginn des Schrittes Sa''. Der Standby-Modus ist als Energiesparmodus konzipiert. Er hat eine Überwachungsfunktion und dient lediglich zur Feststellung, ob überhaupt eine Störung, sei es in Form von Feuchtigkeitstropfen oder Schmutz auf der Außenseite des Körpers 2 vorhanden ist. Für die Durchführung dieser Überwachungsfunktion ist es ausreichend, wenn die drei Schritte Sa'', Sb" und Sc'' nicht kontinuierlich, sondern zum Beispiel nur alle 500 ms durchlaufen werden. Auf diese Weise kann Energie eingespart werden, was insbesondere in einem Kraftfahrzeug wünschenswert ist, wo die Energie von einer Batterie mit begrenzter Kapazität bereitgestellt wird.

Sollte jedoch in dem Schritt Sc'' des Standby-Modus M1 eine Störung auf der Außenseite des Körpers 2 dadurch festgestellt werden, dass die Differenz zwischen den empfangenen Lichtleistungen der beiden Sendezweige A und B größer als der Standby-Schwellenwert ist, so geht der Sensor 1 in einen sogenannten Regen-Modus M2 über. Dieser Regen-Modus zeichnet sich dadurch aus, dass bei ihm in dem ersten Sendezweig A die Schmutzdiode zum Beispiel durch Kurzschließen mit Hilfe des Schaltelementes 100 deaktiviert ist. Dies bedeutet, dass in den beiden Sendezweigen A und B ausschließlich R-Typ-Sendeelemente 3 aktiviert sind. Innerhalb des Regen-Modus M2 erfolgt zunächst in einem Schritt Sa ein Betrieb des so konfigurierten ersten Sendezweiges A und eine Ermittlung der von dem Empfangselement 5 empfangenen Lichtleistung nach Reflexion des Lichtes an dem optisch durchlässigen Körper 2. Nachfolgend wird der erste Sendezweig A gänzlich deaktiviert und nur der zweite Sendezweig B betrieben; wiederum wird dann die von dem Empfangselement 5 empfangene Lichtleistung nach Reflexion des Lichtes an dem optisch durchlässigen Körper ermittelt und gespeichert. In einem nachfolgenden Schritt Sc innerhalb des Regen-Modus wird dann der zweite Sendezweig vollständig deaktiviert. Während des kontinuierlichen Ablaufes dieser Sequenz wird die Differenz zwischen beiden Sendezweigen ständig ermittelt und mit einem vorgegebenen Regen-Schwellenwert verglichen. Für den Fall, dass die Differenz den Regen-Schwellenwert überschreitet, ist vorgesehen, dass ein reiner Wischvorgang ohne Flüssigkeitszufuhr eingeleitet wird. Weil bei dem Regen-Modus M2 in den beiden Sendezweigen A und B ausschließlich R-Typ-Sendeelemente 3 aktiv sind, kann davon ausgegangen werden, dass dann, wenn in Schritt Sc festgestellt wird, dass die Differenz größer als der Regen-Schwellenwert ist, eindeutig ein Störeinfluss in Form von Feuchtigkeitstropfen oder Regentropfen 9 auf der Außenseite des Körpers 2 vorhanden ist. Aufgrund der beschriebenen Konfiguration der Sendezweige im Regen-Modus M2 ist es ausgeschlossen, dass der festgestellte Störeinfluss zum Beispiel auf Staubpartikel oder auf Schmutzpartikel zurückzuführen ist. Aufgrund dieser eindeutigen Diagnose des Störeinflusses ist es sinnvoll, in dem Schritt Sc-2 lediglich einen Wischvorgang einzuleiten. Aufgrund der durch den Regen vorhandenen Feuchtigkeit ist eine Zufuhr von Wasser zusätzlich zu dem Wischvorgang entbehrlich.

Sobald der Wischvorgang eingeleitet wurde, erfolgt ein Rücksprung auf den Beginn des Schrittes Sa. Im Unterschied zu dem zuvor beschriebenen Standby-Modus M1 sieht der Regen-Modus M2 keine zeitliche Verzögerung für den Rücksprung auf den Beginn des Schrittes Sa vor; hier ist vielmehr eine kontinuierliche Überwachung im Hinblick auf das Vorliegen von Regen erwünscht. Sobald die Zufuhr von Feuchtigkeit auf die Außenseite des Körpers 2 aufgehört hat, das heißt insbesondere sobald es aufgehört hat zu regnen und die Außenseite des Körpers 2 trocken ist, wird dies in Schritt Sc innerhalb des Regen-Modus M2 dadurch festgestellt, dass die Differenz der von den beiden Sendezweigen A und B empfangenen Lichtleistungen kleiner als der vorgegebene Regen-Schwellenwert ist. Ein zuvor eingeleiteter Wischvorgang wird dann abgebrochen (Schritt Sd).

Wenn auch die Scheibe jetzt trocken ist, so bedeutet dies nicht, dass sie auch frei von Schmutzpartikeln oder Staubpartikeln ist. Um dies festzustellen, ist erfindungsgemäß vorgesehen, dass der Sensor 1 nach Verlassen des Regen-Modus M2 vorzugsweise in einen sogenannten Schmutz-Modus übergeht. Bei dem Schmutzmodus werden alle Sendeelemente in den beiden Sendezweigen aktiviert, das heißt insbesondere werden auch die S-Typ-Sendeelemente 4 durch Öffnen des Schaltelementes 100 aktiviert. In einem Schritt Sa' innerhalb des Schmutz-Modus M3 ist deshalb vorgesehen, dass zunächst nur der erste Sendezweig A mit aktivierten R- und S-Typ-Sendeelementen 3, 4 betrieben wird. Es wird dann für diese Betriebsweise wiederum die von dem Empfangselement 5 nach Reflexion des Lichtes empfangene Lichtleistung ermittelt und gespeichert. Nachfolgend wird in einem Schritt Sb' der erste Sendezweig A deaktiviert und nur der zweite Sendezweig B mit seinen R-Typ-Sendeelementen 3 betrieben. Auch dann wird wiederum die von dem Empfangselement 5 empfangene Lichtleistung gemessen. Die Differenz zwischen den beiden in den vorherigen Schritten ermittelte Licht-Empfangsleistungen wird berechnet und mit einem Schmutz-Schwellenwert verglichen.

Grundsätzlich lässt die Feststellung, dass die Differenz größer als der Schmutz-Schwellenwert ist, den Rückschluss zu, dass zwar eine Verunreinigung auf der Außenseite des Körpers 2 vorhanden ist; diese Feststellung lässt jedoch keinen Rückschluss auf die Art der Verunreinigung, das heißt einen Rückschluss auf das Vorhandensein von Regen und/oder Staub beziehungsweise Schmutzpartikeln zu. Wenn jedoch, wie bisher beschrieben, der Schmutz-Modus M3 erst dann eingeleitet und durchgeführt wird, wenn zuvor mit Hilfe des Regen-Modus M2 festgestellt wurde, dass keine Feuchtigkeit auf der Außenseite des Körpers 2 vorhanden ist, dann lässt die Feststellung, dass die Differenz in Schritt Sc' in dem Schmutz-Modus größer als der Schmutz-Schwellenwert ist, den Rückschluss zu, dass es sich bei der festgestellten Verunreinigung auf jeden Fall um Staub oder Schmutz handeln muss. Es empfiehlt sich deshalb in diesem Fall die Einleitung eines Waschvorganges in Schritt Sc'-2. Der Waschvorgang unterscheidet sich von dem aus dem Regen-Modus bekannten Wischvorgang dadurch, dass er die Zuführung einer Flüssigkeit, insbesondere einer Reinigungsflüssigkeit auf die Außenseite des Körpers 2 vorsieht. Durch das Zuführen der Flüssigkeit wird zum einen ein Verkratzen der Außenseite des Körpers 2 durch den Wischvorgang vermieden und die Reinigungswirkung verbessert. Nach der Einleitung des Waschvorganges erfolgt ein Rücksprung auf den Beginn des Schrittes Sa'. Genau wie bei dem Regen-Modus M2 ist auch bei dem Schmutz-Modus eine kontinuierliche Überwachung hinsichtlich des Vorliegens einer Verunreinigung auf dem Körper 2 erwünscht, weshalb der besagte Rücksprung vorzugsweise ohne zeitliche Verzögerung erfolgt. Sollte dann bei einem erneuten Durchlaufen der Schritte Sa', Sb' und Sc' erneut festgestellt werden, dass die Differenz größer als der vorgegebene Schmutz-Schwellenwert ist, so wird wiederum nach Schritt Sc'-2 verzweigt, um den Waschvorgang aufrechtzuerhalten. Wird jedoch in Schritt Sc' festgestellt, dass die Differenz kleiner als der vorgegebene Schmutz-Schwellenwert ist, so wird zunächst ein zuvor eingeleiteter Waschvorgang abgebrochen (Schritt Sd') oder es wird direkt in den Standby-Modus M1 zurückgesprungen.

Alternativ zu der bisher beschriebenen Vorgehensweise ist es auch möglich, dass nach dem Durchlaufen des Standby-Modus, das heißt, wenn in diesem eine Verschmutzung der Windschutzscheibe beziehungsweise des Körpers 2 festgestellt wird, zunächst nicht in den Regen-Modus M2, sondern stattdessen in den Schmutz-Modus verzweigt wird. Es wird dann, wie gesagt, in jedem Fall ein Waschvorgang durchgeführt, und zwar auch dann, wenn der Körper 2 durch Regen befeuchtet ist. Nach Beendigung des Schmutz-Modus M3 empfiehlt sich in jedem Fall ein Rücksprung in den Standby-Modus; ein Übergang von dem Schmutz-Modus M3 in den Regen-Modus ist zwar technisch problemlos möglich, wäre aber sinnentleert.

Während der Durchführung eines Kalibrierungsmodus ist die Außenseite des Körpers 2 sowohl frei von Feuchtigkeit wie auch frei von Staub oder Schmutzpartikeln. Für einen solchen Körper umfasst der Kalibrierungsmodus dann folgende Schritte:
Betreiben des ersten Sendezweiges mit aktivierten R- und S-Typ-Sendeelementen 3, 4 und Ermitteln der von dem Empfangselement empfangenen Lichtleistung nach Reflexion des Lichtes an dem optisch durchlässigen Körper. Die auf diese Weise empfangene Lichtleistung wird zwischengespeichert.

Nachfolgend wird der zweite Sendezweig B betrieben und es wird die von dem Empfangselement 5 empfangene Lichtleistung gemessen und gespeichert, wiederum nach Reflexion des Lichtes an dem optisch durchlässigen Körper.

Danach wird die Differenz zwischen den empfangenen und zwischengespeicherten Lichtleistungen ermittelt und als Kalibrierungswert für den Betrieb des Sensors 1 mit aktiviertem S-Typ-Sendeelement abgespeichert. In einem zweiten Durchgang werden die soeben genannten Schritte des Kalibrierungsmodus wiederholt, wiederum für einen sauberen und trockenen Körper 2, diesmal allerdings mit deaktiviertem S-Typ-Sendeelement 4. Am Ende dieses wiederholten Durchlaufs wird dann wiederum die Differenz der empfangenen Lichtleistungen als Kalibrierungswert für einen Betrieb des Sensors 1 mit deaktiviertem S-Typ-Sendeelement 4 gespeichert. Die beiden Kalibrierungswerte werden vorzugsweise dauerhaft in dem Sensor gespeichert.

Während eines späteren realen Betriebs des Sensors 1 können diese abgespeicherten Kalibrierungswerte dann dazu verwendet werden, die jeweils in den Schritten Sc in dem Regen-Modus, in dem Schritt Sc' in dem Schmutz-Modus oder die in dem Schritt Sc'' in dem Standby-Modus zu treffenden Entscheidungen über das Vorliegen einer Verunreinigung zu präzisieren. Die Präzisierung erfolgt dann in der Weise, dass in diesen genannten Entscheidungsschritten die jeweils aktuell gemessene Differenz zwischen den empfangenen Lichtleistungen nicht direkt mit den jeweiligen Schwellenwerten verglichen wird, sondern vor einem Vergleich zunächst um den zugehörigen Kalibrierungswert bereinigt wird. Konkret bedeutet dies für den Standby-Modus M1 und für den Schmutz-Modus M2, die jeweils einen Betrieb des Sensors mit aktiviertem S-Typ-Sendeelement 4 vorsehen, dass der entsprechende Kalibrierungswert, das heißt hier für den Betrieb mit aktiviertem S-Typ-Sendeelement 4 zunächst von der jeweils ermittelten aktuellen Differenz der empfangenen Lichtleistungen abgezogen wird, bevor die dann daraus resultierende Gesamtdifferenz mit dem jeweiligen Schwellenwert verglichen wird. Entsprechend erfolgt während des Regen-Modus M2 eine Ermittlung einer Gesamtdifferenz durch Subtraktion des Kalibrierungswertes für den Betrieb des Sensors ohne S-Typ-Sendeelement 4 von der aktuell ermittelten Lichtleitungsdifferenz. Auch hier wird dann wiederum die Gesamtdifferenz mit dem Regen-Schwellenwert verglichen. In allen genannten Fällen dient die beschriebene Kalibrierung dazu, dass der Sensor bei sauberer und trockener Scheibe keine Fehlentscheidung über einen einzuleitenden Wisch- oder Waschvorgang trifft.

## Patentansprüche

1. Verfahren zum Betreiben eines Sensors (1) zur Detektion von Störeinflüssen (9, 10) auf einer Außenseite eines optisch durchlässigen Körpers (2), wobei der Sensor (1) auf der Innenseite des Körpers (2) angeordnet ist und mindestens ein optisches Empfangselement (5) sowie mindestens einen ersten Sendezweig (A) mit mindestens einem R-Typ-Sendeelement (3) und mindestens einem S-Typ-Sendelement (4) sowie einen zweiten Sendezweig (B) mit mindestens zwei R-Typ-Sendeelementen (3) aufweist, und wobei die R-Typ-Sendeelemente (3) derart ausgerichtet sind, dass ein Großteil der von ihnen ausgesandten optischen Strahlen ohne Feuchtigkeitstropfen (9) oder Staubpartikel an der Außenseite des Körpers (2) auf das mindestens eine Empfangselement (5) totalreflektiert werden und wobei das S-Typ-Sendeelement (4) derart ausgerichtet ist, dass ein Großteil der von ihm ausgesandten optischen Strahlen beim Auftreffen auf Schmutzpartikel (10) auf der Außenseite des Körpers (2) zumindest teilweise an der Außenseite des Körpers (2) auf das mindestens eine Empfangselement (5) rückgestreut werden;
umfassend - in einem Regen-Modus - die folgenden Schritte:
Sa) Betreiben des ersten Sendezweiges (A) und ermitteln der von dem Empfangselement (5) empfangenen Lichtleistung nach Reflexion des Lichtes an dem optisch durchlässigen Körper (2);
Sb) Betreiben des zweiten Sendezweiges (B) und ermitteln der von dem Empfangselement (5) empfangenen Lichtleistung nach Reflexion des Lichtes an dem optisch durchlässigen Körper (2);
Sc) Aktivieren eines Wischvorganges (Sc-2) für den optisch durchlässigen Körper (2) und Rückspringen auf Schritt Sa), wenn der Betrag der Differenz der von den beiden Sendezweigen (A, B) empfangenen Lichtleistungen einen vorgegebenen Regen-Schwellenwert überschreitet;
**dadurch gekennzeichnet, dass**
die Schritte Sa) - Sc) mit deaktiviertem S-Typ-Sendeelement (4) in dem ersten Sendezweig (A) durchgeführt werden.

2. Verfahren nach Anspruch 1, **dadurch gekennzeichnet, dass** nach Schritt Sc) der Wischvorgang nicht aktiviert bzw. abgebrochen wird, wenn die Differenz den Schwellenwert unterschreitet (Schritt Sd).

3. Verfahren nach einem der vorangegangenen Ansprüche, **dadurch gekennzeichnet, dass** das Verfahren zusätzlich zu dem Regen-Modus auch einen Schmutz-Modus vorsieht, bei dem Schritte Sa') und Sb') mit gleichzeitig aktivierten R- und S-Typ-Sendeelementen durchgeführt werden und wobei dann, wenn in einem Schritt Sc') die Differenz zwischen den von den Sendezweigen (A, B) empfangenen Lichtleistungen einen Schmutz-Schwellenwert überschreitet, ein Waschvorgang für den optisch durchlässigen Körper (2) durchgeführt wird.

4. Verfahren nach einem der vorangegangenen Ansprüche, **dadurch gekennzeichnet, dass** das Verfahren zusätzlich einen Standby-Modus vorsieht, in welchem die Schritte Sa'') und Sb'') mit aktivierten R- und S-Typ-Sendeelementen durchlaufen werden, um dann nachfolgend in einem Schritt Sc''), wenn die Differenz der von den beiden Sendezweigen (A, B) empfangenen Lichtleistungen einen vorgegebenen Standby-Schwellenwert überschreitet, auf das Vorliegen einer Störung schließen zu können.

5. Verfahren nach einem der vorangegangenen Ansprüche, **dadurch gekennzeichnet, dass** vorzugsweise vor einer Inbetriebnahme des Sensors eine Kalibrierung des Sensors erfolgt.

6. Computerprogramm zum Betreiben eines Sensors zur Detektion von Störeinflüssen (9, 10) auf der Außenseite eines optisch durchlässigen Körpers, **gekennzeichnet durch** Code, welcher ausgebildet ist, dass Verfahren gemäß einem der Ansprüche 1 - 5 **durch** zuführen, wenn er auf einem Rechengerät, insbesondere einem Mikroprozessor, ausgeführt wird.

7. Computerprogramm nach Anspruch 6, **dadurch gekennzeichnet, dass** der Code auf einem computerlesbaren Datenträger abgespeichert ist.

8. Sensor zur Detektion von Störeinflüssen (9, 10) auf einer Außenseite eines optisch durchlässigen Körpers (2), wobei
der Sensor (1) auf der Innenseite des Körpers (2) angeordnet ist und mindestens ein optisches Empfangselement sowie mindestens einen ersten Sendezweig (A) mit mindestens einem R-Typ-Sendeelement (3) und mindestens einem S-Typ-Sendelement (4) sowie einen zweiten Sendezweig (B) mit mindestens zwei R-Typ-Sendeelementen aufweist, wobei
die R-Typ-Sendeelemente (3) derart ausgerichtet sind, dass ein Großteil der von ihnen ausgesandten optischen Strahlen ohne Feuchtigkeitstropfen (9) oder Staubpartikel an der Außenseite des Körpers (2) auf das mindestens eine Empfangselement (5) totalreflektiert werden und wobei das S-Typ-Sendeelement (4) derart ausgerichtet ist, dass die von ihm ausgesandten optischen Strahlen beim Auftreffen auf Schmutzpartikel (10) auf der Außenseite des Körpers (2) zumindest teilweise an der Außenseite des Körpers (2) auf das mindestens eine Empfangselement (5) rückgestreut werden;
und wobei der erste und der zweite Sendezweig (A, B) jeweils abwechselnd im Zusammenwirken mit dem Empfangselement betreibbar sind;
**gekennzeichnet durch**
ein Schaltelement (100) zum Deaktivieren oder Aktivieren des mindestens einen S-Typ-Sendeelementes (4) in dem ersten Sendezweig (A).

9. Sensor nach Anspruch 8, **dadurch gekennzeichnet, dass** das Schaltelement (100) parallel zu dem S-Typ-Sendeelement (4) geschaltet ist, zum Kurzschließen oder Nicht-Kurzschließen des S-Typ-Sendeelements (4).

10. Steuergerät (40) für einen Sensor (1) zur Detektion von Störeinflüssen (9, 10) auf einer Außenseite eines optisch durchlässigen Körpers (2), mit einem Rechengerät (41), insbesondere einem Mikroprozessor, und einem Speicherelement (42), wobei der Sensor (1) auf der Innenseite des Körpers (2) angeordnet ist und mindestens ein optisches Empfangselement sowie mindestens einen ersten Sendezweig (A) mit mindestens einem R-Typ-Sendeelement (3) und mindestens einem S-Typ-Sendelement (4) sowie einen zweiten Sendezweig (B) mit mindestens zwei R-Typ-Sendeelementen aufweist, wobei
die R-Typ-Sendeelemente (3) derart ausgerichtet sind, dass ein Großteil der von ihnen ausgesandten optischen Strahlen ohne Feuchtigkeitstropfen (9) oder Staubpartikel an der Außenseite des Körpers (2) auf das mindestens eine Empfangselement (5) totalreflektiert werden und wobei das S-Typ-Sendeelement (4) derart ausgerichtet ist, dass die von ihm ausgesandten optischen Strahlen beim Auftreffen auf Schmutzpartikel (10) auf der Außenseite des Körpers (2) zumindest teilweise an der Außenseite des Körpers (2) auf das mindestens eine Empfangselement (5) rückgestreut werden;
und wobei der erste und der zweite Sendezweig (A, B) jeweils abwechselnd im Zusammenwirken mit dem Empfangselement betreibbar sind;
**dadurch gekennzeichnet, dass** das Steuergerät ausgebildet ist zum Aktivieren oder Deaktivieren des S-Typ-Sendeelementes Sensors, insbesondere über ein Schaltelement (160).
